# EUROPÄISCHE PATENTANMELDUNG

(11) **EP 0 545 270 A2**
(43) Veröffentlichungstag der Anmeldung: **09.06.1993**
(21) Anmeldenummer: 92120142.2
(22) Anmeldetag: 26.11.1992
(51) Int. Cl.: G01T 1/18, H01J 47/02

(54) **Vielfachzähler zur Erfassung radioaktiver Strahlung**

(30) Priorität: 29.11.1991 DE 4139369
(71) Anmelder: LABORATORIUM PROF. DR. RUDOLF BERTHOLD GmbH & Co. KG, D-75323 Bad Wildbad (DE)
(72) Erfinder: Berthold, Fritz, Dr., W-7530 Pforzheim (DE); Pfleger, Manfred, Electrongenieur, W-7547 Bad Wilgbad (DE)
(74) Vertreter: Frank, Gerhard, Dipl.-Phys.

(57) **Zusammenfassung**

Ein Zählrohr zur Erfassung radioaktiver Strahlung benutzt zur Signalerfassung ausschließlich Kathodenpads, die auf der Innenseite der der Probe gegenüberliegenden Innenwand des Zählrohrgehäuses elektrisch isoliert angeordnet sind. Vorzugsweise ist jedem Kathodenpad eine eigene Auswerteelektronik zugeordnet, was die parallele Auswertung der Zählrohrsignale ermöglicht.

Die Kathodenpads sind insbesondere als metallisch leitende Fläche auf einer Trägerplatte aus Isoliermaterial aufkaschiert.

Der Anwendungsbereich solcher Zählrohre mit ausschließlicher Verwendung von Kathodenpads liegt insbesondere bei Vielfachzählrohren, bei denen die Teilflächen einer auszumessenden Gesamtfläche in ihrer Aktivität individuell erfaßt und ausgewertet werden sollen.

## Beschreibung

Die Erfindung betrifft einen Vielfachzähler zur Erfassung radioaktiver Strahlung nach dem Oberbegriff des Patentanspruches 1.

Ein derartiger Vielfachzähler ist aus der GB-A-2190787 bekannt. Es handelt sich hierbei um einen Vielfachzähler solcher Bauart, mit dem gleichzeitig die Radioaktivität mehrerer Proben, die beispielsweise in Probenschälchen untergebracht sind, erfaßt werden soll. Jeder Probe ist hierbei ein im wesentlichen rundes, flächiges Kathodenelement zugeordnet, mehrere Kathodenelemente sind untereinander zu Reihen verbunden und senkrecht zu einer solchen Reihe sind Anodendrähte gespannt, derart, daß ein Kreuzungspunkt Kathodenelement/Anodendraht über jeder Probe gebildet wird. Zur Dekodierung zum Nachweis der Radioaktivität einer bestimmten Probe ist daher sowohl das Signal des Kathodenelementes als auch der Anodendrähte erforderlich.

Die Ableitung der Anodendrahtimpulse erfolgt bekanntlich mit Hilfe von Koppelkondensatoren, die die Verbindung zum Verstärker herstellen. Jeder der Koppelkondensatoren muß hierbei die Zählrohr-Hochspannung ertragen und darf keinerlei Störimpulse erzeugen. Wegen der erforderlichen Isolation ist der Raumbedarf der erforderlichen Vielzahl von Koppelkondensatoren mit ihrer Verkabelung recht groß.

Es ist Aufgabe der Erfindung, insbesondere den gattungsgemäßen Vielfachzähler so zu verbessern, daß die Auswertung der Zählimpulse bei zumindest gleicher Nachweisempfindlichkeit ohne Heranziehung von Anodendrahtsignalen erfolgen kann, und daß dies mit einer konstruktiv einfachen, für verschiedene Anwendungszwecke auslegbaren Ausgestaltung des Zählrohrs ermöglicht wird.

Erfindungsgemäß wird diese Aufgabe gemäß dem kennzeichnenden Teil des Patentanspruchs 1 gelöst.

Bei dieser Lösung wird eine wesentliche Raumersparnis durch Verzicht auf die Koppelkondensatoren erzielt. Diese Raumersparnis gestattet eine kompakte Bauweise, insbesondere wenn die Auswerteelektronik durch eine der Zahl der Kathodenelemente entsprechende Anzahl baugleicher Impulsauswerteschaltungen gebildet ist, die jeweils einzeln mit einem dem Anschlußkontakt zugeordneten Kathodenelement verbunden sind. Verfügen die Impulsauswerteschaltungen über ladungs- oder stromempfindliche Eingangsstufen, wird der Spannungshub am Eingang minimiert und dadurch kapazitives Übersprechen weitgehend verhindert.

Beim erfindungsgemäßen Vielfachzähler wird jeder auszumessenden Teilfläche oder jeder Probe ein Kathodenelement zugeordnet. Dies ermöglicht (im Unterschied zum gattungsbildenden Proportionalzählrohr) die direkte und gleichzeitige Messung jeder einem Kathodenelement zugeordneten Teilfläche (z.B. einem Probenschälchen). Die Zuordnung von mindestens zwei Anodendrähten zu jedem Kathodenelement gewährleistet eine gleichmäßige Ansprechempfindlichkeit und Ausnutzung der Fläche des Kathodenelements und auch eine hohe Signalamplitude.

Bei dieser Ausgestaltung wird besonders deutlich, daß schon der Platzbedarf für die oben erwähnten Hochspannungs-Koppelungskondensatoren eine solche Lösung nicht durchführbar werden ließe, beispielsweise sind Ausführungsformen erforderlich, die 96 Proben in einem matrixartigen Raster von bis zu 9 x 9 mm² erfassen.

Sofern eine kodierte Auslesung (wie beim gattungsbildenden Proportionalzählrohr nach der GB-A-2190787) gewünscht wird, ist auch diese Konzeption ohne Schwierigkeiten durchführbar, wenn das zur Ortsdefinition zwingend erforderliche zweite Signal ebenfalls von einem Kathodenelement erzeugt wird; hierbei würden dann beispielsweise jeder auszumessenden Teilfläche 2N gleich große Kathodenelemente zugeordnet, die in Reihen und Spalten zusammengefaßt sind (N = Zahl der Anodendrähte).

Beide Konzepte (direkte Auslesung und codierte Auslesung) lassen sich besonders vorteilhaft in die Praxis umsetzen, wenn für die Realisierung der Kathodenelemente und/oder der ihr zugeordneten Impulsauswerteschaltungen die Leiterplatten-Technologie herangezogen wird, d.h. wenn diese Schaltungen als (erforderlichenfalls mehrlagige) gedruckte Schaltungen ausgeführt werden, wobei die Leiterplatte ein Trägerelement bildet, auf dessen Unterseite eine metallisch leitende Schicht als Kathodenelement aufkaschiert ist. Hierbei sind dann zusätzliche Gestaltungen möglich, wie beispielsweise die Anordnung eines Teiles der Verstärkerschaltungen auf der anderen Seite der Leiterplatte im SMT/Surface Mount Technology, einschließlich der Schaltungs- und Steckerelemente. Alle weiteren Schaltungsbauteile sind dann auf der Außenseite der rückseitigen Zählrohrwandung zu einem kompakten Elektronikblock zusammengefaßt und über Leiterplattensteckverbinder direkt mit der Leiterplatte verbunden.

Es hat schon einige Vorschläge gegeben, ortsempfindliche Proportionalzählrohre zu konzipieren, die die Anodendrähte nicht zur Signalauslesung heranziehen; so zeigt z.B. die DE-A-35 46 062 ein nach der charge-division-Methode arbeitendes, eindimensional ortsempfindliches Zählrohr, bei dem die Kathode aus einer Vielzahl von parallel nebeneinanderliegenden metallischen Streifen gebildet ist, die beispielsweise auf einem Substrat mit der Technik der gedruckten Schaltungen herstellbar sind. Bei dieser Ausführungsform verlaufen diese Kathodenstreifen senkrecht zum Anodendraht; sie sind derart verbunden, daß sie eine widerstandsbehaftete Kathode bilden, die beidseitig mit je einem Verstärker abgeschlossen ist; der Aufwand für die Verstärker ist bei einem Zählrohr dieser Bauart daher unbeachtlich. Eine Anwendung der beschriebenen Kathodenstreifen ist auch bei einem zweidimensional ortempfindlichen Zählrohr denkbar, wobei in der genannten DE-A-35 46 062 hierfür lediglich vorgeschlagen wird, die Kathode als zweidimensionale Matrix auszubilden.

In der US-A-3,975,639 wird dagegen für den Fall eines zweidimensional ortsempfindlichen Zählrohrs vorgeschlagen, zwei Ebenen von senkrecht zueinander verlaufenden Kathodenstreifen beidseitig des Anodendrahtes vorzusehen, deren Signale einzeln mit einem Verstärker durch Koinzidenzverfahren ausgewertet werden können.

Schließlich wird noch vorgeschlagen, eine zweidimensional ortsempfindliche Messung mit einem speziellen Elektrodenmuster zu erreichen (NIM.A 242(1986), 484-486).

Eine weitere Konzeption sieht vor (US-A-4,622,467) auf der Kathode eine Mehrzahl matrixartig angeordneter Auswerteelemente (coding element) anzuordnen, die reihenweise und spaltenweise mit je einem ladungsemfpindlichen Verstärker zur Auswertung verbunden und kapazitiv gegeneinander abgetrennt sind.

Die Kathode besteht hierbei aus einer Trägerschicht, die Auswerteelemente sind aus leitfähigem Material aufgetragen. Gegenüber dieser Kathode befindet sich in geringem Abstand eine Anodenfläche; bei Eintritt eines Partikels in den Zwischenraum zwischen Anodenfläche und Kathodenplatte induziert die auf der Anodenfläche sich bildende elektrische Ladung in mehreren gegenüberliegenden Auswerteelementen ein Signal; die Amplituden von Signalen benachbarter Auswerteelemente werden dann ausgewertet und aus dem Amplitudenschwerpunkt die Position des Ausgangsereignisses bestimmt.

Schließlich beschreibt IEEE Transactions on Nuclear Science, Vol.36, No. 1, February 1989, noch einen zweidimensional ortsempfindlichen Zähler mit speziellem Aufbau, bei dem die Anode unter Zuhilfenahme der Leiterplattentechnologie aus Tausenden von Elementen (dort als "pads" bezeichnet) aufgebaut ist, denen jeweils ein eigener Verstärker zugeteilt ist, um eine schnelle Auslesung der einzelnen "Pixel -Pads" zu gewährleisten.

Es sind folglich für spezielle Anwendungen aufwendige Zählrohrlösungen für die zweidimensional ortsempfindliche Messung radioaktiver Ereignisse vorgeschlagen worden, die eine Aufteilung von Anode oder Kathode in einzelne Elemente vorsehen. Immer steht hierbei eine möglichst hohe Ortsauflösung im mm-Bereich oder darunter im Vordergrund, was naturgemäß eine sehr große Anzahl solcher Elemente mit geringen Abmessungen erfordert, mit hohem Aufwand für die Auswertung.

Für einen wirtschaftlichen Einsatz als Vielfachzähler, mit typischen Teilflächen oder Probenflächen in der Größenordnung von 5 mm², sind diese vorbekannten Lösungen daher sowohl hinsichtlich ihres Zähleraufbaus als auch ihrer Auswerteelektronik zu aufwendig. Die "Umfunktionierung" eines ortsempfindlichen Zählrohres zu einem Vielfachzähler, in dem man den Probenpositionen entsprechende Integrationsbereiche bildet, hat darüber hinaus den Nachteil, daß durch elektronische Nichtlinearitäten und Instabilitäten nicht immer gewährleistet ist, daß Integrationsbereiche und Probenpositionen vollständig kongruent sind. Solche Probleme sind bei der erfindungsgemäßen Direkt-Erfassung ausgeschlossen.

Ein grundsätzliches Problem bei gattungsgemäßen Vielfachzählern ist, sicherzustellen, daß die von einer Teilfläche ausgehende radioaktive Strahlung möglichst ausschließlich das oder die dieser Teilfläche Zugeordnete Kathodenelement(e) anspricht, d.h. die Vermeidung von Überstrahl- und Übersprech-"cross-talk"-Effekten. Solche Effekte können entweder elektrischen Ursprungs sein (durch Induzierung von Impulsen in benachbarte ) oder auch strahlungsbedingt (durch Eindringen von Strahlung in benachbarte Auswertebereiche). Zur Vermeidung der letztgenannten Übersprechursache sieht das gattungsbildende Proportionalzählrohr eine kollimatorähnliche Struktur vor, mit Bohrungen, deren Innenwandungen zur Abschirmung der Strahlung benachbarter Teilflächen dient. Derartig massive Kollimatoreinrichtungen sind jedoch insbesondere beim Nachweis energiearmer Strahlung wie z.B. ³H- oder ¹⁴C-Strahlung nicht unproblematisch, da sie den Abstand Präparat - Zählrohrkammer vergrößern und somit die Nachweisempfindlichkeit reduzieren können; dies kann auch durch zusätzliche Maßnahmen wie z.B. Saugfelder oder Driftfelder nicht vollständig vermieden werden, zumal diese auch durch solche Kollimator-einrichtungen beeinträchtigt werden.

Zur Vermeidung von elektrisch bedingtem Übersprechen erweist sich die Leiterplatten-Technik bei der ausschließlichen Verwendung von Kathodeneiem. als sehr hilfreich: Durch Aufbringung von zwischen den Kathodenelementen verlaufenden, vorzugsweise geerdeten Streifen auf den Leiterplatten lassen sich solche unerwünschten Effekte vermeiden.

Alternativ oder zusätzlich zu diesen Streifen können strahlungsabsorbierende Zwischenwände innerhalb der Zählkammer zwischen benachbarten Kathodenreihen angeordnet sein, die sowohl eine elektrische als auch eine strahlungsmäßige Abschirmung benachbarter Auswertebereiche bewirken.

Konstruktiv besonders einfach lassen sich derartige Zwischenwände parallel zu den Anodendrähten anordnen, wo sie eine rippenähnliche Struktur bilden, die auch zur mechanischen Versteifung des Gehäuses beiträgt.

Es können jedoch auch ausschließlich die genannten Streifen zur Abschirmung vorgesehen sein, die dann insgesamt eine netzartige Struktur auf der Leiterplatte bilden.
Antikoinzidenzschaltungen dieser Streifen und/oder Antikoinzidenzschaltungen benachbarter Kathodenpads können ebenfalls zur Eliminierung von Strahlungsereignissen, die nicht eindeutig einer einzigen Teilfläche zuordenbar sind, wie z.B. Nulleffekt-Strahlung oder cross-talk eingesetzt werden.

Der konsequente Einsatz von Kathodenelementen zur Messung unter Nutzung der modernen Leiterplatten-Technologie ermöglicht den Aufbau von Vielfachzählern für verschiedenartige Zwecke:
Wie oben schon erläutert, handelt es sich bei Vielfachzählern um solche Zähler, bei denen die Teilflächen einer auszumessenden Gesamtfläche in ihrer Zählrate individuell erfaßt und ausgewertet werden sollen. Dies kann ein Proportionalzählrohr gemäß der GB-A-2190787 sein, wo eine Vielzahl von Proben in Probenschälchen getrennt und gleichzeitig ausgewertet werden sollen, es kann aber auch ein sogenanntes Großflächenzählrohr sein, wo die Oberflächenkontamination einer Fläche zu messen ist, die beispielsweise in der Größenordnung von 1 m² liegen kann. Durch Aufteilung der Gesamtfläche (beispielsweise in 100 gleiche Teilflächen) und Zuordnung eines Kathodenpads (beispielsweise mit 95 x 95 mm² Fläche) zu jeder Teilfläche, erreicht man einerseits eine grobe "Ortsauflösung" entsprechend den Abmessungen der verwendeten Kathodenpads, was beispielsweise zur Lokalisierung der Kontaminationen nützlich sein kann. Andererseits kann beispielsweise eine derart lokalisierte Kontamination mit höherer Nachweisempfindlichkeit bestimmt werden als bei einer Messung der Gesamtfläche, da bei einer Beschränkung der Auswertung auf ein (oder wenige) Kathodenpads auch nur eine entsprechend des Flächenanteils verminderte Nulleffektstrahlung die Auswertung des Nutzsignals beeinträchtigt.

Der "nahtlose" Anschluß der Kathodenpads vermeidet darüber hinaus Totzonen, wie sie bei der Verwendung separater Zählrohre zu diesem Zweck in deren Zwischen- und Randbereichen unvermeidlich sind und garantiert somit die praktisch lückenlos flächendeckende Erfassung der Strahlungsereignisse.

Als Extremfall läßt sich in Anwendung der erfindungsgemäßen Lehre auch ein "Einfachzählrohr" konzipieren, bei dem nur ein einziges Kathodenelement vorgesehen ist, das von mehreren Anodendrähten überspannt wird.

Ein solcher Einfachzähler und Ausführungsbeispiele von Vielfachzählern werden nun anhand von Zeichnungen näher erläutert. Es zeigen:
- Fign. 1 und 2: ein Ausführungsbeispiel als Einfachzähler,
- Fig. 3: eine schematische Darstellung eines ersten Ausführungsbeispiels eines Vielfachzählers mit Direktauslesung,
- Fign. 4 und 5: eine Unteransicht und ein Querschnitt durch eine konstruktive Ausgestaltung des Vielfachzählers mit Direktauslesung gemäß der schematischen Darstellung der Fig. 3,
- Fig. 4A: mehrere Horizontalabschnitte in den Ebenen E1..E4 der Fig. 5,
- Fig. 6: eine schematische Darstellung eines zweiten Ausführungsbeispiels eines Vielfachzählers mit codierter Auslesung,
- Fign. 7 und 8: Prinzipdarstellungen weiterer Möglichkeiten der codierten Auslesung bei einem Vielfachzähler,
- Fign. 9 und 10: ein drittes Ausführungsbeispiel eines Vielfachzählers in Schnitt und Unteransicht und
- Fign. 11 und 12: ein viertes Beispiel eines Vielfachzählers in Schnitt und Unteransicht.

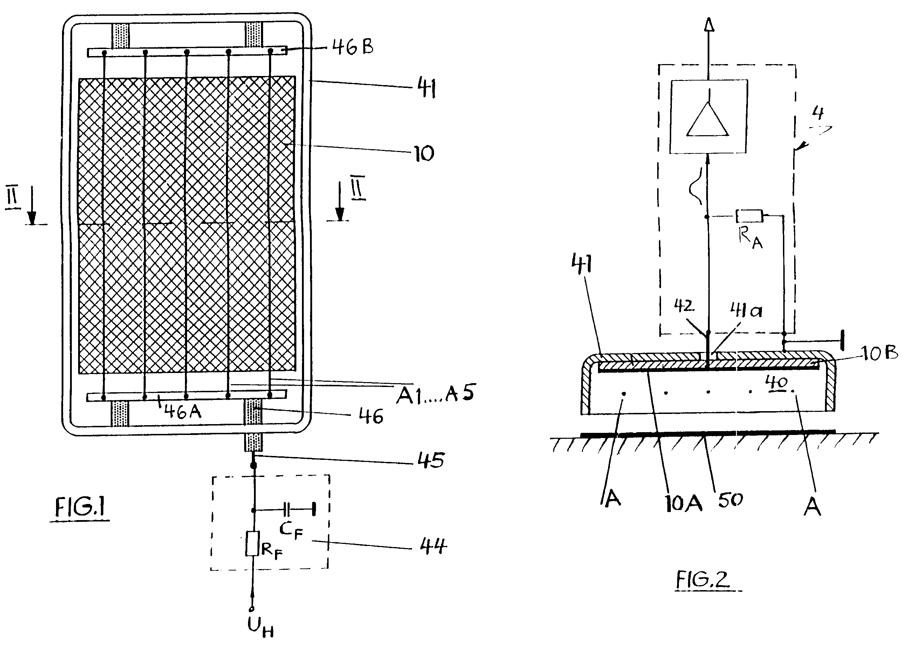

Fig. 1 zeigt eine Unteransicht, Fig. 2 einen Querschnitt in der Ebene II-II eines Einfachzählers zur grundsätzlichen Erläuterung der Erfindung.

Das Zählrohrgehäuse 41 umschließt an fünf Seiten die Zählkammer 40, die nach unten, zur Probe 50 hin, je nach Art der nachzuweisenden Strahlung offen, mit einer Folie oder auch mit einem Potentialgitter abgeschlossen sein kann. Das Gehäuse 41 befindet sich auf Erdpotential und dient zur Abschirmung der Zählkammer 40 gegen äußere Störeinflüsse und zur Aufrechterhaltung der Geometrie des elektrischen Feldes in der Zählkammer.

Über Isolatoren 46 vom Gehäuse 41 isoliert sind über Verteilerleisten 46A,46B insgesamt fünf Anodendrähte A1...A5 parallel zur einen Längsseite des Gehäuses 41 gespannt. Über einen Anschluß 45 sind die Anodendrähte über einen Tiefpaß 44, bestehend aus Widerstand R_{F} und Kondensator C_{F}, mit der Hochspannung U_{H} verbunden. Von besonderer Bedeutung ist, daß der Anschluß 45 lediglich zur Hochspannungsversorgung vorgesehen ist, nicht jedoch zur Abnahme von Zählimpulsen, wie bei üblichen Zählrohren. Über den Kondensator C_{F} sind die Anodendrähte A1...A5 impulsmäßig an Erdpotentiai oelegt, so daß die Wahrscheinlichkeit von Störeinstreuungen infolge von Isolationsmängeln im Hochspannungsteil minimiert wird.

Erfindungsgemäß wird zur Abnahme der Zählimpulse ein platten- oder scheibenförmiges Kathodenelement verwendet, im folgenden als Kathodenpad 10 bezeichnet, das aufgrund parallel zur Rückseite, d.h. der der Probe 50 gegenüberliegenden Innenwandung des Zählrohrgehäuses 41, liegt. Grundsätzlich besteht ein solches Kathodenpad 10 aus einer den Anodendrähten zugewandten, unteren leitenden Fläche 10A (Kathodenfläche), die auf einem Träger 10B aus Isolatormaterial aufgebracht ist. Im einfachsten, dargestellten Fall ist der Träger 10B eine Leiterplatte, auf deren Unterseite die Kathodenfläche aufkaschiert ist. Ein Anschlußkontakt auf der Oberseite der Trägerplatte 10B ist durch eine durchmetallisierte Bohrung in der Trägerplatte 10B realisierbar. Ein Anschlußkontakt 42 (beispielsweise ein Steckerelement) ist durch eine Bohrung 41A im Zählrohrgehäuse 41 nach außen geführt.

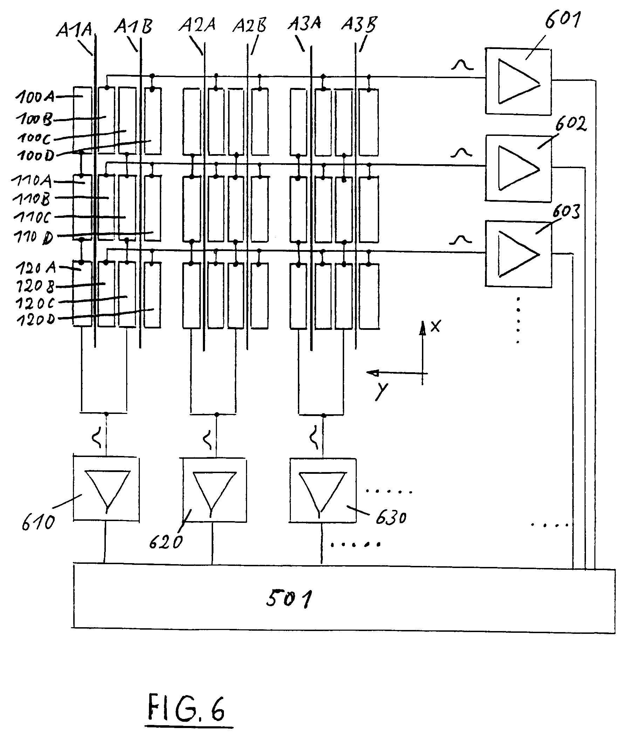

Es ist jedoch auch möglich, eine beidseitig kaschierte oder mehrlagige (Multilayer) Leiterplatte als Trägerplatte einzusetzen (Fig. 5), wobei die obere Kaschierung zur Bildung von Leiterbahnen ausgebildet sein kann, die zur Verbindung von Elektronikkomponenten und Steckerelementen dienen und eine der mittleren Lagen als Massefläche zur Abschirmung des Kathodenpads gegenüber der elektronischen Schaltung dienen kann.

Auf jeden Fall ist gewährleistet, daß der Anschluß der Kathodenpads an die zugehörigen Verstärkerschaltungen auf kürzestem Wege direkt erfolgt; die sehr kurzen Leitungswege minimieren die Gefahr des elektrischen Übersprechens durch kapazitive Kopplungseffekte und Einstreuung von externen Störungen.

Eine Eingangsschaltung 4 besteht im wesentlichen aus einem vorzugsweise ladungsempfindlich ausgeführten Verstärker, mit dem der Spannungshub am Kathodenpad und dadurch das kapazitive Übersprechen minimierbar ist.

Das in den Figuren 1 und 2 dargestellte Zählrohr findet als Einfachzählrohr Verwendung, beispielsweise kann die schematisch dargestellte Probe 50 sich in einem Probenschälchen befinden und die Probe kann auf negative Hochspannung (ca. 1000 Volt) gelegt sein, um insbesondere bei niederenergetischer ³H - oder ¹⁴C- β-Strahlung eine Erhöhung der Nachweisempfindlichkeit zu erreichen, indem die Sekundärelektronen in den Gasverstärkungsbereich um die Anodendrähte gezogen werden.

Überraschenderweise hat sich gezeigt, daß bei dem erfindungsgemäß ausgebildeten Kathodenpad Zählsignale (positiver) Polarität gewonnen werden können, mit annähernd gleicher Impulshöhe wie bei der Gewinnung von Anodenzählimpulsen bei der Verwendung der Anodendrähte A1...A5 als Zähldrähte.

Der mit dieser Konzeption möglich gewordene Einsatz der Leiterplattentechnologie und die damit erzielbaren Vorteile (Ausbildung der Kathodenpads als Teil von Mehrschicht-Leiter-Platten mit gedruckten Schaltungen unter Integration von Leiterbahnen und elektronischen Bauteilen, einfache Verbindungstechnik, äußerst platzsparende Bauweise) kommen wie oben schon erwähnt besonders zum Tragen beim Bau von Vielfach-Zählrohren, wo die auszumessende Probenfläche beispielsweise von matrixartig angeordneten Probenschälchen (wie bei der gattungsbildenden Vorrichtung) eingenommen wird, beispielsweise von sogenannten Mikrotiter-Platten, die 8x12 Probenschälchen umfassen.

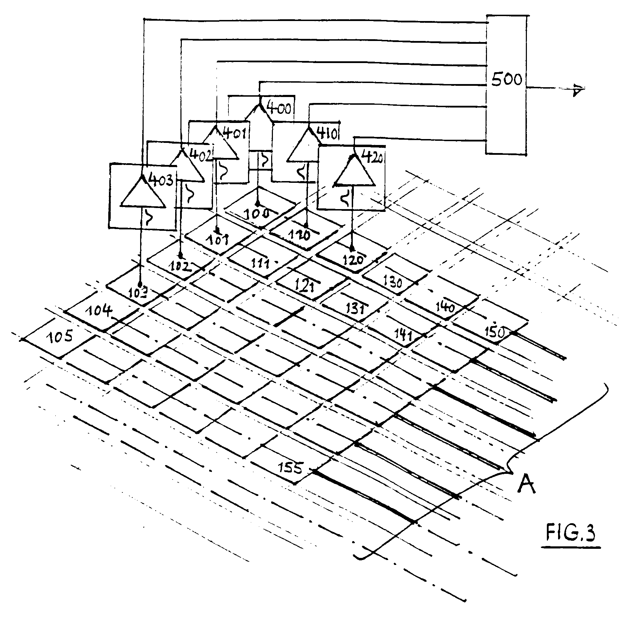

Figur 3 zeigt eine schematische Darstellung eines Vielfachzählers oder eines Großflächenzählrohrs mit Kathodenpads 100...155 in Matrixanordnung (6x6=36 Kathodenpads), wobei jede Reihe von jeweils 6 Kathodenpads über Jeweils einem von mehreren Anodendrähten A verläuft. Jedem dieser Kathodenpads ist eine eigene Verstärker-Diskriminatorschaltung 400... zugeordnet, mit deren Hilfe jedes Strahlungsereignis, das im Bereich eines Anodendrahtes unterhalb einer Reihe von zugeordneten Kathodenpads stattfindet, registriert und an eine gemeinsame Auswerteschaltung 500 weitergegeben wird. Hier ist der elektronische Aufwand durch die erforderliche hohe Anzahl der Verstärker-Diskriminatorschaltungen 400... relativ hoch, jedoch ist diese Art der direkten, parallelen Auswertung aller Zählimpulse die schnellste und bedarf in der Auswerteschaltung 500 keiner weiteren Schaltungsmaßnahmen zur Identifizierung des Kathodenpads von dem ein Zählimpuls stammt, wie dies bei der weiter unten erläuterten codierten Auslesung der Fall ist. Als Auswerteschaltung 500 genügt im wesentlichen ein Vielkanalzähler, dessen Kanalzahl der Anzahl der den Kathodenpads zugeordneten Verstärker-Diskriminatorschaltungen entspricht.

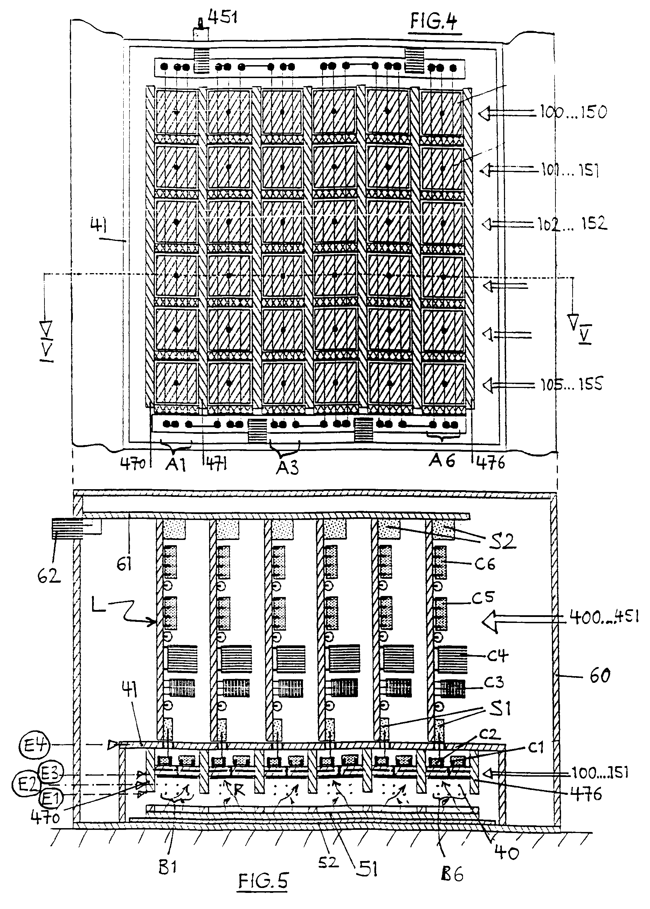

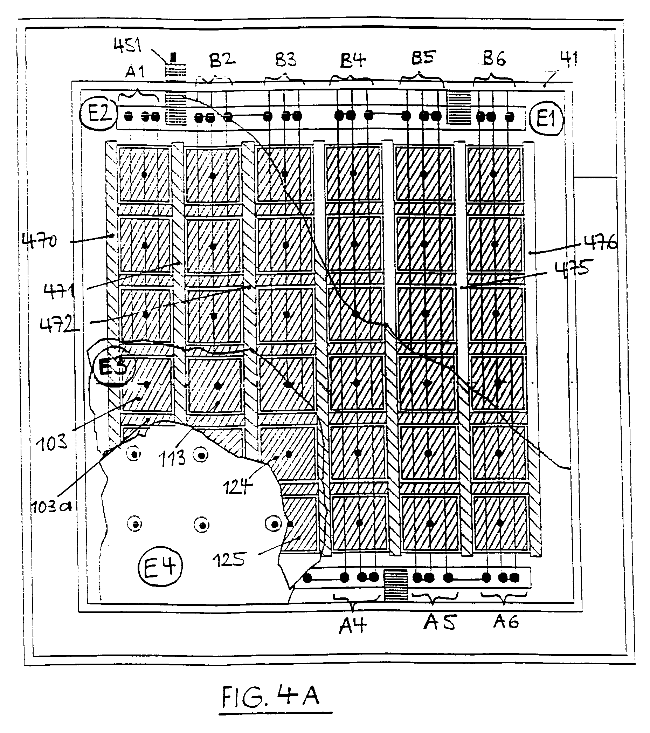

Die Figuren 4 und 5 zeigen ein bevorzugtes Ausführungsbeispiel eines Vielfachzählers, der hier zur Erfassung der Radioaktivität dient, die von diskreten Proben in einem Probenhalter 51 stammt. Der Probenhalter 51 sitzt auf einer Isolatorunterlage 52 auf dem Boden des Gehäuses 60 des Vielfachzählers auf, so daß der Probenhalter ein gegenüber dem Gehäuse unterschiedliches (negatives) Potential aufweisen kann, das zur Erhöhung der Nachweisempfindlichkeit eingesetzt werden kann.

Innerhalb der Zählkammer 40 sind die 6x6 Kathodenpads 100...155 matrixartig angeordnet, die in Figur 4 obere Reihe beinhaltet somit die Kathodenpads 100,110,120,130,140,150, die letzte, untere Reihe die Kathodenpads 105,115,125,135,145,155. Jeder Spalte von Kathodenpads ist eine Gruppe A1,A2...A6 von Anodendrähten zugeordnet, die über einen Anschluß 451 an Hochspannung liegen. Unterhalb jeder Gruppe A1...A6 von Anodendrähten befindet sich jeweils eine Gruppe von Potentialdrähten B1...B6, die vorzugsweise auf Erdpotential liegen und zur Verbesserung der Feldgeometrie in der Zählkammer 40 dienen.

Die erste Gruppe A1 von Anodendrähten liegt somit unter den Kathodenpads 100,101,102,103,104 und 105, die letzte Gruppe A6 unter den Kathodenpads 150,151,152,153, 154,155. Jede dieser Gruppen ist von ihrer benachbarten Gruppe durch eine parallel zu den Anodendrahtgruppen und senkrecht zu den Kathodenpads verlaufende Trennwand 470...476 aus leitendem Material abgeschirmt, um Übersprecheffekte zwischen benachbarten Kathodenpad-Reihen zu vermeiden. Die Trennwände 470...476 dienen jedoch auch mittels (nicht dargestellter) Sicken oder Randnuten zur Aufnahme der Leiterplatten mit den Kathodenpads. Die Kathodenpads 100... sind über durchmetallisierte Bohrungen mit der Oberseite der Leiterplatte verbunden, wo über Leiterbahnen die elektrische Verbindung zu Elektronikkomponenten C1,C2 (beispielsweise Eingangsverstärker) und/oder Steckverbinder S1 hergestellt ist.

Die übrigen Teile der Verstärker-Diskriminatorschaltungen 400...451 sind ebenfalls auf Leiterplatten L realisiert, die die erforderlichen Elektronik-Komponenten C3...C6 tragen und die über die Steckverbinder S1 (beispielsweise sogenannte Steckpfostenverbinder) einerseits mit den Elektronik-Komponenten C1,C2 auf der der Leiterplatte und über Steckverbinder S2 andererseits mit einer oberen Leiterplatte 61 verbunden sind und somit die in Figur 3 schematisch dargestellten, baugleichen Verstärkerschaltungen 400... realisieren. Über einen Ausgang 62 sind die Verstärkersignale der externen Auswerteschaltung 500 zuführbar.

Bei dieser konstruktiven Ausgestaltung des bevorzugten Ausführungsbeispiels wird deutlich, daß jedem Probenschälchen auf dem Probenhalter 51 "sein" Zählkanal zugeordnet ist, beginnend mit dem in Form und Abmessung auf das auszumessende Probenschälchen abgestimmten Kathodenpad und endend mit dem am Ausgang 62 abgreifbaren, aufbereiteten Zählimpuls.

Die Leiterplattentechnik ermöglicht hier eine sehr platzsparende Ausführung, wobei insbesondere noch eine Möglichkeit zur Eliminierung von elektrischem Übersprechen hervorgehoben werden soll, nämlich die Ausbildung von sogenannten "guard-strips" (eines dargestellt in Figur 4A, Nr. 103a) in Form von geerdeten oder auf einem sonstigen Hilfspotential liegenden Leiterbahnen. Diese guard-strips liegen zwischen den Kathodenpads, bei manchen Ausführungsformen wie z.B. dem oben beschriebenen Großflächenzählrohr können solche guard-strips die Kathodenpads allseitig umschließen.

Figur 4A zeigt zur Verdeutlichung des Aufbaus des Vielfachzählers mehrere Horizontalschnitte in verschiedenen Ebenen, wobei die Blickrichtung von der Probenseite her gewählt ist: Die Ebene E1 liegt auf der Höhe der Gruppen B1...B6 von Potentialdrähten, die über Verteilerleisten gehalten und mit dem Gehäuse 41 verbunden sind und somit mit letzterem auf Erdpotential liegen.

Die Ebene E2 liegt auf der Höhe der Gruppen A1...A6 von Anodendrähten, die über Verteilerleisten untereinander und mit dem Hochspannungsanschluß 451 elektrisch verbunden sind.

Die Ebene E3 liegt auf der Höhe der Unterseiten des Kathodenpads 100...155, von denen einige mit ihren Bezugszeichen gekennzeichnet sind.

Die Ebene E4 schließlich liegt auf der Höhe der horizontalen, rückseitigen Wandung des Gehäuses 41 und zeigt Bohrungen entsprechend der Bohrung 41a in Fign. 1 und 2 mit ihren durchgeführten Steckverbindern S1.

Anstelle der beim oben geschilderten Ausführungsbeispiel geschilderten direkten, parallelen Auslesung jedes Kathodenpads kann auch eine codierte Auslesung der Kathodenpad-Impulse ausgeführt werden, wie dies schematisch in den beiden Skizzen der Figur 6 dargestellt ist:
Grundsätzlich ist es hierzu erforderlich, jedes einer auszumessenden Teilfläche zugeordnete Kathodenpad in mindestens zwei Teile zu segmentieren oder zusätzliche Kathodenpads vorzusehen, da wenigstens ein Kathodenpad jeweils zur Gewinnung einer X-Ortsinformation bzw. einer Y-Ortsinformation gebraucht wird. Vor- und Nachteile der codierten Auswertung sind unmittelbar aus einem Vergleich der Figur 3 mit Figur 6 entnehmbar: Während bei der direkten Auslesung m x n (=36 im Ausführungsbeispiel) separate Verstärkerschaltungen erforderlich sind, benötigt die codierte Auslesung lediglich m + n (=12) solcher Verstärkerschaltungen 601... also hier lediglich ein Drittel des diesbezüglichen elektronischen Aufwandes. Im Unterschied zur Auswerteschaltung 500 der Figur 3 benötigt dann allerdings die Auswerteschaltung 501 der Figur 6 bei der codierten Auslesung zusätzliche elektronische Bestandteile zur Decodierung der eintreffenden Zählimpulse, in der Regel von Koinzidenzschaltungen, die bei gleichzeitigem Signalauftreten von einer der Impulsauswerteschaltungen in X- bzw. Y-Richtung dann die x-y-Koordinate der zugehörigen Probenposition ermitteln.

Grundsätzlich muß darauf geachtet werden, daß außerdem die Zuordnung der Kathoden-(Teil-) Flächen zu dem Anodendraht bzw. den Anodendrähten oder Anodendrahtgruppen A1A,A1B;A2A,A2B;A3A,A3B derart ist, daß ein Zählereignis im Bereich des Anodendrahtes/der Anodendrähte zu etwa gleich starken, in die X-Kathodenteilflächen bzw. Y-Kathodenteilflächen induzierten Zählimpulsen führt. Wie aus Figur 6 erkennbar ist, sind jeweils zwei Hälften (z.B. 100A,100B bzw. 100C,100D) eines Kathodenpads (z.B. 100) symmetrisch zum zugehörigen Anodendraht (A1A,A1B) angeordnet, um diese Forderung zu erfüllen.

Die jeweils rechts eines Anodendrahts liegenden Pad-Hälften 100B,100D; 110B,110D; 120B,120D sind reihenweise in Richtung quer zu den Anodendrähten untereinander verbunden und jeweils einer Verstärkerschaltung 601... zur Gewinnung der y-Koordinate zugeordnet. Die jeweils links liegenden Pad-Hälften 100A,100C; 110A,110C; 120A,120C sind ebenfalls reihenweise untereinander in Richtung der Anodendrähte und mit jeweils einer Verstärkerschaltung 610 zur Gewinnung der x-Koordinate verbunden.

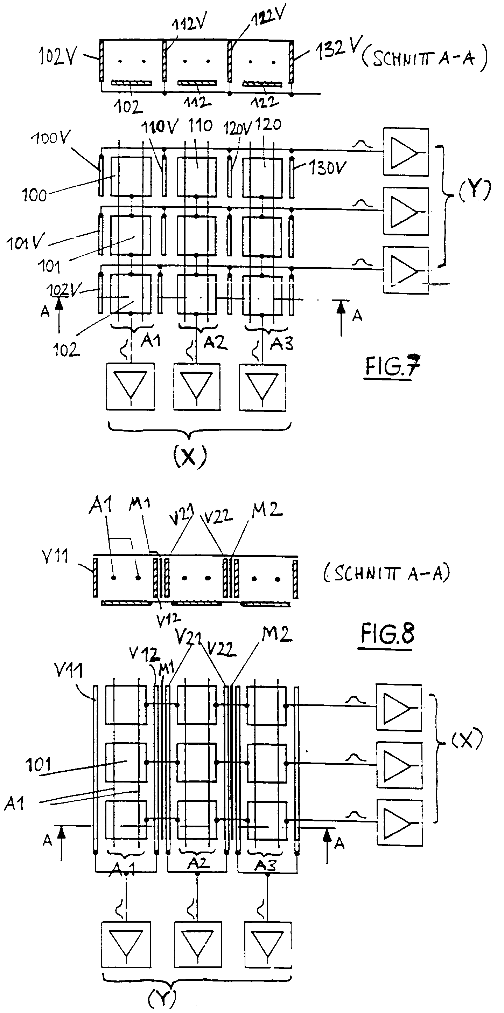

Die Figuren 7 und 8 zeigen schematische Darstellungen weiterer Möglichkeiten zur codierten Auslesung hinsichtlich der konstruktiven Gestaltung der Kathodenpad-Segmente einerseits und ihrer Zuordnung zu den Anodendrähten andererseits.

Anstelle einer Unterteilung der auf der Zählrohrkammerrückwand angeordneten Kathodenpads (Figur 6) sind beim Ausführungsbeispiel der Figur 7 zusätzliche senkrechte Kathodenpad-Ebenen vorgesehen, so daß die in Figur 7 als Quadrate dargestellten, rückseitigen Kathodenpads 100,101...120 in Richtung der Anodendrähte zur Gewinnung der X-Ortsinformation verbunden sind; als Seitenflächen ausgeführte, sich beidseitig jeweils eines dieser Kathodenpads erstreckende vertikale Kathodenpads 102V...132V sind (quer zu den Anodendrähten) miteinander verbunden zur Gewinnung der Y-Ortsinformation. Bei diesem Ausführungsbeispiel könnten die getrennt dargestellten Kathodenpads 100...122 auch als Kathodenpad-Streifen realisiert sein. Hier sind jeweils zwei Anodendrähte für jede Anodendrahtgruppe A1...A3 vorgesehen, um eine gleichmäßige Einkoppelung des Zählimpulses in die umgebenden Kathodenpads zu gewährleisten.

Beim Ausführungsbeispiel der Figur 8 schließlich sind die vertikalen Kathoden als durchgehende Kathodenstreifen V11...V32 ausgeführt und die Zuordnung von X- und Y-Information ist vertauscht. Zwischen den Kathodenwänden benachbarter Reihen sind Isolatorflächen M1,M2 eingefügt.

Es soll betont werden, daß das Prinzip der codierten Auslesung sich unter ausschließlicher Verwendung von Kathodenpads besonders vorteilhaft umsetzen läßt.

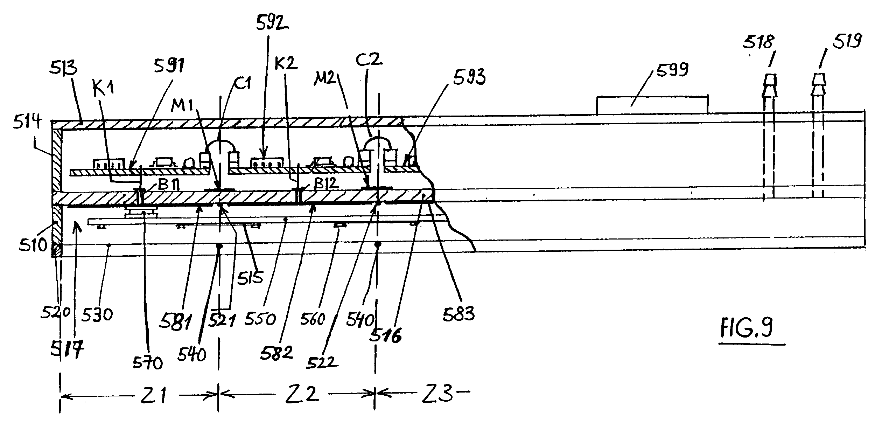

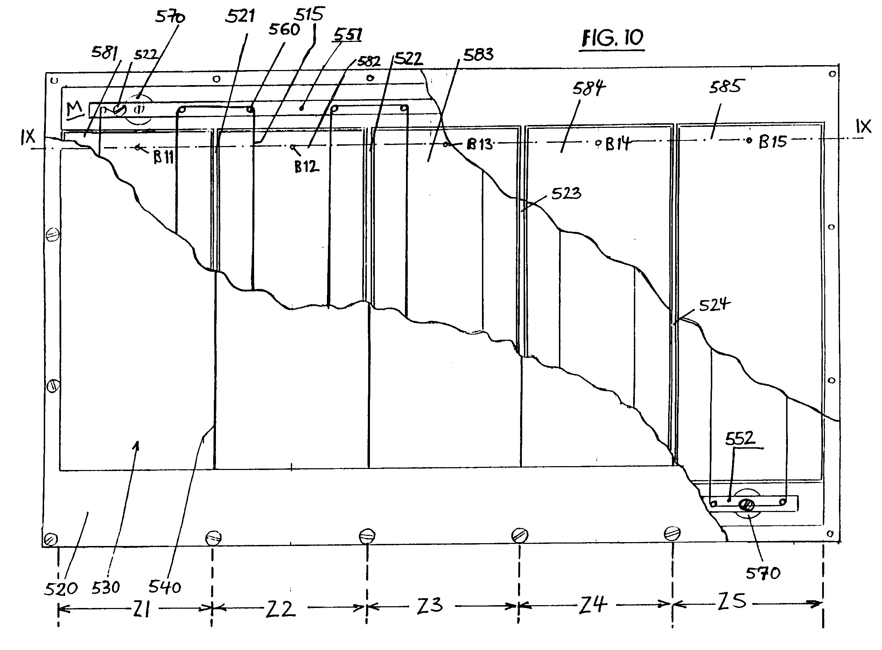

Bei dem in den Fign. 9 und 10 dargestellten Vielfachzähler handelt es sich um ein Großflächen-Durchflußzählrohr, wie es beispielsweise in Kontaminationsmonitoren Verwendung finden kann, wie z.B. Fußboden-Kontaminationsmonitore, Ganzkörpermonitore oder Abfallmonitore. Es wird verwendet für die gleichzeitige und getrennte Messung von α - und β -Strahlen.

Der Vielfachzähler nach den Fign. 9 und 10 ist unterteilt in fünf gleichartig aufgebaute Abschnitte Z1...Z5 mit einer Fläche von jeweils etwa 100 cm². Dabei beinhaltet jede Zone einen Teil des aktiven Zählrohrvolumens 517, aus dem die der jeweiligen Zone zugeordneten Zählrohrsignale ausgekoppelt werden. Im folgenden wird der Aufbau dieses Vielfachzählers von unten nach oben beschrieben:
Den unteren Abschluß bildet eine Fensterfolie 530, beispielsweise eine zumindest auf der Innenseite metallisierte Kunststoff-Folie. Zur Halterung dieser Fensterfolie 530 dient ein umlaufender Rahmen 520 mit Querstegen 540, die als in den Rahmen eingesetzte Drähte ausgebildet sind. Die Fensterfolie 530 bildet den unteren Abschluß des Zählrohrvolumens 517, dessen seitliche Begrenzung von einem umlaufenden Metallrahmen 510 gebildet wird. Die der Fensterfolie 530 gegenüberliegende Rückwand des Zählrohrvolumens 517 wird von einer Basisplatte 516 aus elektrisch isolierendem Material gebildet, auf dieser Basisplatte 516 ist ein weiterer umlaufender Rahmen 514 angeordnet, der nach oben mit einer Deckplatte 513 abgeschlossen ist. Das zwischen der Oberseite der Basisplatte 516, dem umlaufenden Rahmen 514 und der Deckplatte 513 gebildete Volumen dient zur Aufnahme der Auswerteelektronik bzw. der hierfür vorgesehenen Signalauswerteschaltungen, wie dies im einzelnen noch weiter unten erläutert wird.

Entsprechend den fünf Abschnitten Z1...Z5, in die der Vielfachzähler unterteilt ist, befinden sich auf der Unterseite der Basisplatte 516 fünf rechteckige, eng aneinandergrenzende Kathodenelemente 581...585, die voneinander durch schmale, auf Masse liegende Metallstreifen 521...524 getrennt sind, die ihrerseits in eine äußere Umrandung M der fünf Kathodenelemente 581,,,585 einmünden. Die fünf Kathodenelemente sind somit elektrisch durch die auf Masse liegende Fläche M und die verbindenden Stege 521...524 voneinander abgetrennt.

Die Realisierung der Basisplatte 516 der Kathodenelemente 581...585 und der umgebenden Masseflächen M bzw. 521...524 erfolgt (wie auch bei den oben schon erläuterten Ausführungsbeispielen) auf einfache und zweckmäßige Art in Form einer Leiterplatte, wie sie üblicherweise zum Aufbau elektronischer Schaltungen verwendet wird. Die Streifen 521...524 sind beim Ausführungsbeispiel etwa 1-3 mm breit gewählt.

Dieser Aufbau vermeidet Totzonen zwischen den von den einzelnen Abschnitten Z1...Z5 gebildeten Einzeldetektoren des Vielfachzählers.

Eine zusätzliche Abschirmung gegenüber der auf der Oberseite befindlichen Auswerteschaltung bilden Massestreifen M1...M4 auf der Rückseite der Basisplatte 516, die etwa gegenüber den Streifen 521...524 angeordnet und etwa 1 cm breit sind.

Im Eckbereich der Basisplatte 516 sind insgesamt vier Isolatorelemente 570 angeordnet, die parallel zu den Längsseiten des Vielfachzählers zwei Stegelemente 551, 552 tragen, die ihrerseits Nietköpfe 560 und eine Klemmschraube 522 zur Halterung eines Anodendrahtes 515 aufweisen. Dieses Ausführungsbeispiel sieht einen gemeinsamen, einzigen Anodendraht 515 vor, der derart den fünf Kathodenelementen 581... 585 zugeordnet ist, daß jeweils zwei parallel laufende Anodendrahtabschnitte jedem Kathodenelement 581...585 zugeordnet werden, die parallel zu den Längskanten der Kathodenelemente verlaufen. Erreicht wird dies durch Nietköpfe 560 auf den Stegen 551, 552, die in etwa gleichem Abstand dort angeordnet sind und über die der Anodendraht 515 mäanderartig geführt wird und somit die Anodendrahtabschnitte in der gewünschten Weise im Zählrohrvolumen 517 zwischen Eintrittsfenster 530 und ihrem zugeordneten Kathodenelement aufgespannt werden.

Da der Anodendraht 515 nicht zur Signalauskoppelung verwendet wird, können Hochspannungskondensatoren Zur Signalauskoppelung entfallen.

Die Zuführung der Anodenspannung erfolgt über einen der Isolatoren 570, der als Durchführungsisolator ausgebildet ist.

Der Anschluß des Zählrohrvolumens 517 an die Zählgasversorgung erfolgt über in die Basisplatte 516 eingesetzte Anschlußstutzen 518 und 519.

Der Anschluß der Kathodenelemente 581...585 an die oberhalb der Basisplatte 516 untergebrachte Auswerteelektronik erfolgt über durchmetallisierte Bohrungen B11...B15 der Basisplatte 516 und darin eingesteckte Kontaktstifte K1...K5, die unmittelbar zu den Impulseingängen der Verstärker auf den Signalauswerteschaltungen 591...595 führen. Jede der Signalauswerteschaltungen der Auswerteelektronik ist in Form einer gedruckten Schaltung aufgebaut, wobei zur Abschirmung gegenüber den Kathodenelementen 581...585 die untere, dem Zählrohrvolumen 517 zugewandte Seite der gedruckten Schaltungen als durchgehende Massefläche ausgebildet sind.

Die Signalauswerteschaltungen 591...595 sind über Verbindungselemente C1...C4 miteinander und mit einem externen Anschlußstecker 599 verbunden. Über letzteren werden die erforderlichen Be-triebsspannungen zugeführt und die Ausgangssignale der Diskriminatoren der Signalauswerteschaltungen zur weiteren Verarbeitung herausgeführt.

Zur Abschirmung der in den Signalauswerteschaltungen enthaltenen Impulsverstärker und Diskriminatorschaltungen ist das aus dem umlaufenden Rahmen 514 und aus der Deckplatte 513 gebildete Gehäuse in geeigneter Weise elektrisch abgeschirmt.

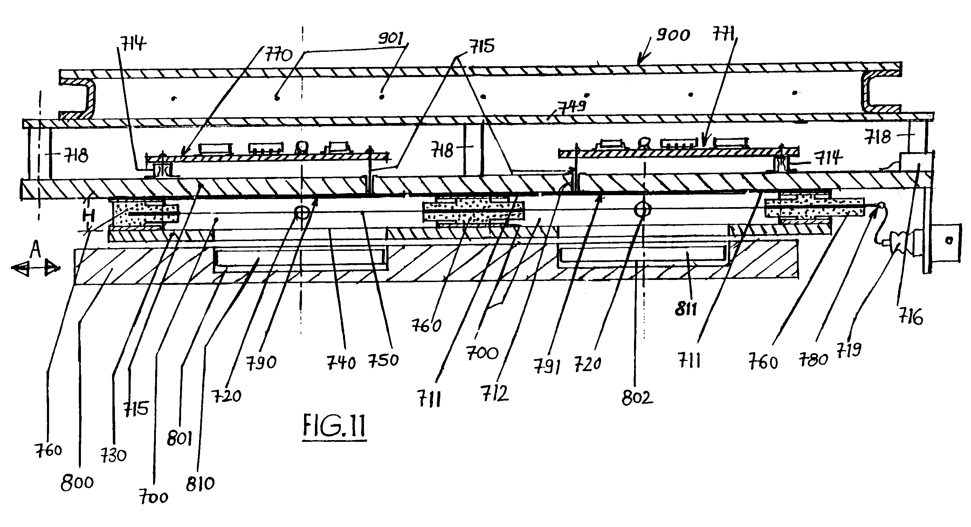

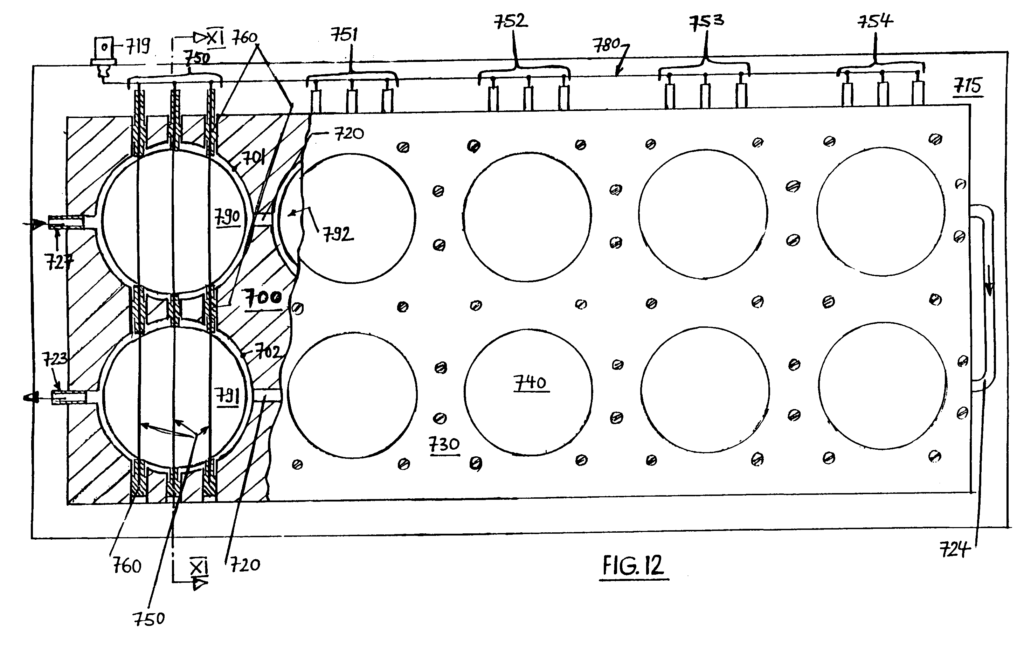

Bei dem in den Fign. 11 und 12 dargestellten vierten Ausführungsbeispiel eines Vielfachzählers handelt es sich um ein Zehnfachdurchfluß-Zählrohr zur gleichzeitigen Messung von bis zu zehn diskreten Proben; in Verbindung mit einer (nicht dargestellten) Bleiabschirmung ist eine solche Detektoranordnung für Low-Level-Messungen geeignet. Die Auswerteelektronik ist hierbei ausgelegt für die gleichzeitige und getrennte Messung der α- und β-Aktivitäten.

Zunächst wird der mechanische Aufbau dieses Vielfachzählers anhand der Fig. 11 von unten nach oben erläutert:
Bei dem dargestellten Ausführungsbeispiel des Vielfachzählers dient ein Zählrohrkörper 700 aus aktivitätsarmem Elektrolytkupfer zur Bildung des Zählrohrvolumens von zehn Meßzählrohren durch zehn kreisförmige Durchbrüche 701...710, die in zwei parallelen Reihen angeordnet sind. Die Stärke dieses Zählrohrkörpers und die dadurch gebildete Höhe H des Zählrohrvolumens beträgt hierbei zur Erzielung eines möglichst niedrigen Null-Effektes etwa 6-8 mm.

Als unterer Abschluß der gebildeten zehn Zählrohrvolumina dient eine untere Deckplatte 730 mit einer Fensterfolie 740 aus zumindest auf der Innenseite metallisierter Kunststoffolie. Die obere Begrenzung der Zählrohrvolumina wird von einer Trägerplatte 715 gebildet, so daß durch diese Konzeption zehn scheibenförmige Zählrohrvolumina entstehen.

Zur gemeinsamen Zählgasversorgung sind zwei an einer Stirnseite liegende Zählrohrvolumina mittels Anschlußstutzen 723, 727 an die Zählgasversorgung angeschlossen und benachbarte Zählrohrvolumina sind über Verbindungsbohrungen 720 verbunden, so daß zwei untereinander in Verbindung stehende Reihen gebildet werden, die auf der den Anschlußstutzen 723, 727 gegenüberliegenden Stirnseite mit einer U-förmigen Verbindungsleitung 724 untereinander verbunden sind, so daß das über den Anschlußstutzen 727 einströmende Zählgas nacheinander alle zehn Zählrohrvolumina durchströmt und am Anschlußstutzen 723 den Detektor verläßt.

Der derart massiv ausgebildete Zählrohrkörper 700 bildet eine wirksame Abschirmung der einzelnen Zählrohrvolumina gegen die radioaktive Strahlung in benachbarten Zählrohrvolumina.

Bei diesem Ausführungsbeispiel sind jeweils zwei benachbarten Zählrohrvolumina eine Gruppe 750...754 von jeweils drei Anodendrähten zugeteilt, die parallel zur Schmalseite des Vielfachzählers verlaufen und die Zählrohrvolumina so durchziehen, daß der mittlere Anodendraht beidseitig zwei parallel verlaufende Anodendrähte aufweist, deren Abstand vom mittleren Anodendraht jeweils ein Viertel bis ein Sechstel des Durchmessers jedes der Zählrohrvolumina entspricht. Zur Fixierung der Anodendrähte 750 sind im Zählrohrkörper 700 Isolatorelemente 760 in entsprechende Bohrungen eingepreßt. Hierbei sind die Isolatorelemente 760 der mittleren Reihe und einer der äußeren Reihe als Durchführungsisolatoren ausgebildet und sämtliche (im Ausführungsbeispiel insgesamt 15) Anodendrähte sind auf einer Längsseite des Vielfachzählers mit einer gemeinsamen Leitung 780 untereinander und mit einem Steckverbinder 719 zur Hochspannungszuführung verbunden, so daß die Anodendrähte hier parallel geschaltet sind.

Die zur Signalauskoppelung vorgesehenen Kathodenelemente 790...799 (790-792 in den Figuren dargestellt) sind kreisförmig ausgebildet und so dimensioniert, daß sie nahezu denselben Durchmesser wie die die Zählrohrvolumina bildenden kreisförmigen Durchbrüche 701...710 des Zählrohrkörpers 700 aufweisen. Die Kathodenelemente befinden sich auch bei diesem Ausführungsbeispiel auf der Unterseite des Trägerelementes 715 aus elektrisch isolierendem Material. Auch hier wird zur Realisierung der Kathodenelemente als Trägerelement 715 eine kupfer-kaschierte Leiterplatte verwendet, auf der mit den gleichen Verfahren wie bei der Herstellung von Leiterplatten für elektronische Schaltungen sowohl die gewünschten kreisförmigen Kathodenelemente, als auch die diese mit einem Abstand von etwa 0,3 mm umgebende Massefläche 711 realisiert sind.

Der Anschluß der Kathodenelemente 790...799 an die zugehörige Auswerteelektronik 770...779 (770 und 771 in Fig. 11 dargestellt) erfolgt auch hier über durchmetallisierte Bohrungen 712 in dem Trägerelement 715 und dort eingesetzte Kontaktelemente 715. Die Signalauswerteschaltungen 770...779 der Auswerteelektronik sind wie bei den vorhergehenden Ausführungsbeispielen geschildert aufgebaut, so daß sie hier nicht im einzelnen erläutert werden müssen. Über Kontaktelemente 714 gelangen die Ausgangssignale der Signalauswerteschaltungen 770...779 an einen Anschlußstecker 716.

Die Auswerteelektronik ist in einem Gehäuse mit Wandungsteilen 718 und einer zugehörigen Abdeckplatte 749 untergebracht.

Die Abdeckplatte 749 bildet auch die untere Begrenzung des Zählrohrvolumens eines Großflächen-Schirmzählrohres 900, das mit seinen Zähldrähten 901 den oberen Abschluß des hier beschriebenen Vielfachzählers bildet. Dieses Großflächen-Schirmzählrohr dient insbesondere zur Abschirmung von externer Strahlung, so daß die Empfindlichkeit des Vielfachzählers und damit seine Eignung für Low-Level-Radioaktivitätsmessungen verbessert wird.

Bei derartigen Low-Level-Zählrohren erweist sich die erfindungsgemäße Signalauslesung ausschließlich durch die Kathodenelemente auch deswegen als besonders vorteilhaft, weil die Wahrscheinlichkeit des Auftretens von Störimpulsen infolge von Isolationsmängeln von Koppelkondensatoren durch die bei der erfindungsgemäßen Lösung mögliche niederohmige Zuführung der Hochspannung zu den Anodendrähten und durch die Vermeidung der unter Hochspannung stehenden Koppelkondensatoren erheblich vermindert wird bzw. praktisch ganz entfällt.

Zur Aufnahme der mit diesem Vielfachzähler meßbaren zehn Einzelproben ist der Probenschieber 800 mit zehn zylindrischen Vertiefungen 801... (801 und 802 in Fig. 11 dargestellt) ausgestattet, in die insgesamt zehn Probenschälchen 810...819 (810 und 811 in Fig. 11 dargestellt) eingesetzt werden können. Zweckmäßigerweise ist dabei der Durchmesser der zylindrischen Vertiefungen 801... im wesentlichen gleich dem Durchmesser der kreisförmigen Öffnungen in der Deckplatte 730 und somit gleich dem Durchmesser des jeweiligen Eintrittsfensters der einzelnen Zählrohrvolumina.

Der Probenschieber 800 ist in Richtung des Doppelpfeiles A verschiebbar ausgelegt und kann in seiner Meß position dicht an der unteren Abdeckplatte 730 angesetzt werden.

Die beschriebene Zuordnung von in den Probenschälchen 801... befindlichen radioaktiven Proben zu "ihrem" Zählrohrvolumen gestattet eine Messung, die weitestgehend frei sowohl von Übersprecheffekten aufgrund der Strahlung benachbarter Proben als auch frei von Einflüssen externer Strahlung und somit hochempfindlich ist.

## Patentansprüche

1. Vielfachzähler zur Erfassung radioaktiver Strahlung unter Verwendung von elektrisch leitenden, auf der der Strahlungsquelle abgewandten Seite der Anodendrähte angeordneten, flächigen Kathodenelementen, die mit einer Auswerteelektronik verbunden sind,
dadurch gekennzeichnet, daß jedem Kathodenelement (100...155) mindestens zwei Anodendrähte (A1...A6) zugeordnet sind,
daß zur Signalerfassung ausschließlich die Kathodenelemente vorgesehen sind, daß die Auswerteelektronik eine der Zahl der vorgesehenen Kathodenelemente oder zumindest der Summe der Kathodenelementreihen und Kathodenelementspalten entsprechende Anzahl baugleicher Verstärkerschaltungen (400...) beinhaltet, die jeweils mit einem zugeordneten Kathodenelement oder bei Koinzidenzauswertung einer zugeordneten Kathodenelementreihe oder Kathodenelementspalte verbunden sind, daß zur Ausbildung der Kathodenelemente ein ein- oder beidseitig kaschiertes oder als mehrlagige Leiterplatte (Multilayer) ausgeführtes Trägerelement (10B) vorgesehen ist, und daß die Kathodenelemente über durch das Zählrohrgehäuse (41) geführte Anschlußkontakte und mittelbar über elektronische Schaltungsteile auf der gegenüberliegenden Seite ihres Trägerelements oder unmittelbar mit der Auswerteelektronik verbunden sind, die außerhalb des Zählrohrgehäuses (41) angeordnet ist.

2. Vielfachzähler nach Anspruch 1, dadurch gekennzeichnet, daß die Eingangsstufen der Verstärkerschaltungen (400...) ladungs- oder stromempfindlich ausgebildet und auf der den Kathodenelementen gegenüberliegenden Seite des Trägerelements (10B) angeordnet sind.

3. Vielfachzähler nach Anspruch 1, dadurch gekennzeichnet, daß die matrixartig angeordneten Kathodenelemente rechteckig oder rund sind, und daß die jedem Kathodenelement zugeordneten Anodendrähte (A1...A6) parallel und symmetrisch zur Mittellinie des Kathodenelements verlaufen.

4. Vielfachzähler nach Anspruch 1, mit Einrichtungen zur Identifizierung und Eliminierung von Impulsen, die durch Strahlungsereignisse induziert wurden, die außer in dem/den emittierenden Proben oder Teilflächen zugeordneten Kathodenelement/en Impulse induziert haben, dadurch gekennzeichnet, daß diese Einrichtungen die in benachbarten Kathodenelementen gleichzeitig auftretenden Impulse mit Hilfe von Antikoinzidenz-Schaltungen eliminieren.

5. Vielfachzähler nach Anspruch 1, mit Einrichtungen zur Identifizierung und Eliminierung von Impulsen, die durch Strahlungsereignisse induziert wurden, die außer in dem/den emittierenden Proben oder Teilflächen zugeordneten Kathodenelementen auch in anderen Proben zugeordneten Kathodenelementen Impulse induziert haben, dadurch gekennzeichnet, daß diese Einrichtungen strahlungsabsorbierende Zwischenwände (470...476) und/oder gegenüber den Kathodenelementen elektrisch isolierte Leiterbahnen (103a) zwischen benachbarten Kathodenelementen parallel und/oder senkrecht zu den Anodendrähten beinhalten, die auf ein geeignetes Potential (Masse/Hilfsspannung) gelegt sind, und deren Signale zur Ansteuerung einer Antikoinzidenzschaltung abgeleitet werden können.

6. Vielfachzähler nach Anspruch 1 und 3, dadurch gekennzeichnet, daß zur parallelen Erfassung von Teilbereichen der auszumessenden Fläche oder von Proben jedem Teilbereich oder jeder Probe jeweils ein Kathodenelement mit zugeordneter Verstärkerschaltung zugeordnet ist und jeder Kathodenelementreihe jeweils mindestens zwei gemeinsame Anodendrähte zugeordnet sind.

7. Vielfachzähler nach Anspruch 1 und 3, dadurch gekennzeichnet, daß bei zweidimensionaler, matrixartiger Anordnung von Einzelproben oder matrixartiger Aufteilung von Teilbereichen Anzahl und Dimensionierung der verwendeten Kathodenelemente auf Anzahl und Größe der auszumessenden Proben oder Teilbereiche derart abgestimmt sind, daß zur kodierten Auslesung jeweils einer Probe oder eines Teilbereichs mindestens zwei Kathodenelemente vorgesehen sind, die zur Gewinnung der x-y-Ortsinformation durch Koinzidenzauswertung dienen, wobei die Zahl der baugleichen Verstärkerschaltungen der Summe und Reihen und Spalten der Kathodenelemente entspricht.

8. Vielfachzähler nach einem der vorhergehenden Ansprüche, dadurch gekennzeichnet, daß mehrere Proben in einem Probenhalter (51) untergebracht sind, der ein vom Zählrohrgehäuse (41) verschiedenes Potential aufweist.

9. Verwendung eines Vielfachzählers nach Anspruch 1 und 3 als zweidimensional ortsempfindliches Zählrohr, wobei die Dimensionierung der verwendeten Kathodenelemente ein grobes Ortsraster in der Größenordnung im Millimeterbereich oder darüber festlegt.

10. Zähler zur Erfassung flächiger radioaktiver Strahlung, dadurch gekennzeichnet, daß zur Signalerfassung ausschließlich ein (einziges) auf der Innenseite der der Probe (50,51) gegenüberliegenden Innenwand des Zählrohrgehäuses (41) elektrisch isoliert angeordnetes Kathodenelement (10) vorgesehen ist, dessen Anschlußkontakt (42) durch das Zählrohrgehäuse (41) durchgeführt ist, wo es mit einer Auswerteelektronik (4) verbunden ist, und daß diesem Kathodenelement (10) mehrere Anodendrähte (A1...A5) zugeordnet sind.

11. Vielfachzähler nach Anspruch 1, dadurch gekennzeichnet, daß die mindestens zwei Anodendrähte, die jedem Kathodenelement (581...585) zugeordnet sind, von Abschnitten eines gemeinsamen Anodendrahts (515) gebildet sind, der mäanderartig gehalten ist und dessen parallel über den Kathodenelementen verlaufenden Abschnitte im wesentlichen äquidistant sind (Fign. 9 und 10).

12. Vielfachzähler nach Anspruch 11, dadurch gekennzeichnet, daß N rechteckige Kathodenelemente (581...585) in Reihe angeordnet sind, und der Anodendraht (515) so angeordnet ist, daß zwei Anodendrahtabschnitte jedem Kathodenelement zugeordnet sind.

13. Vielfachzähler nach Anspruch 11 und 12, dadurch gekennzeichnet, daß die Anodendrahtabschnitte parallel zur Längsseite der N Kathodenelemente verlaufen.

14. Verwendung des Vielfachzählers nach Anspruch 11-14 als Großflächenzählrohr zur Kontaminationsmessung mit einer Kathodenelementfläche von jeweils etwa 100cm².

15. Vielfachzähler nach Anspruch 6, dadurch gekennzeichnet, daß aktive Zählrohrvolumina durch MxN kreisförmige Bohrungen eines Zählrohrkörpers (700) in matrixartiger Anordnung seitlich begrenzt sind, daß kreisförmige Kathodenelemente (790...799) mit geringfügig geringerem Durchmesser über diesen Bohrungen (701...) auf dem elektrisch isolierenden Trägerelement (715) angeordnet sind, und daß die Bohrungen nach unten von einer Fensterfolie (740) abgeschlossen, miteinander durch Verbindungsbohrungen (720, 724) verbunden und mit Zählgas versorgt sind (Fign. 11 und 12).

16. Vielfachzähler nach Anspruch 15, dadurch gekennzeichnet, daß 2x5 Kathodenelemente vorgesehen sind, daß jeweils eine Gruppe (750...754) von drei Anodendrähten jeweils zwei benachbarten Kathodenelementen (790, 791) zugeordnet ist und sich durch benachbarte Bohrungen (701, 702) des Zählrohrkörpers (700) erstreckt, und daß die insgesamt 15 Anodendrähte auf einer Seite des Zählrohrkörpers (700) miteinander und mit einem Hochspannungsanschluß (719) verbunden sind.

17. Vielfachzähler nach Anspruch 16, dadurch gekennzeichnet, daß ein als Probenschieber ausgebildeter Probenhalter (800) derart unter den Bohrungen (701...) des Zählrohrkörpers (700) dicht anliegend anbringbar ist, daß zylindrische Aufnahmevertiefungen (801...) mit Probenschälchen (810...) konzentrisch zu den Bohrungen (701...) des Zählrohrkörpers (700) und zu den Kathodenelementen (790) zu liegen kommen.

18. Verwendung eines Vielfachzählers nach einem der vorhergehenden Ansprüche als Low-Level-Zählrohr, mit einem aufgesetzten Großflächen-Schirmzählrohr (900) und ggf. einer Bleiabschirmung zur Eliminierung/Reduzierung von Störstrahlung.
